# EUROPEAN PATENT APPLICATION

(11) **EP 3 089 067 A1**
(43) Date of publication of application: **02.11.2016**
(21) Application number: 15746562.6
(22) Date of filing: 23.01.2015
(51) Int. Cl.: G06F 21/44, H04M 11/00, H04W 4/02, H04W 84/10

(54) **COMMUNICATION SYSTEM, SERVER, AND COMPUTER PROGRAM**

(30) Priority: 05.02.2014 JP 2014020657
(71) Applicant: Aplix IP Holdings Corporation, Tokyo 169-0051 (JP)
(72) Inventor: SHIRAKAWA, Takahiro, Tokyo 1690051 (JP); CHUN, Jangsoo, Tokyo 1690051 (JP); ADACHI, Eiji, Tokyo 1690051 (JP)
(74) Representative: Cohausz & Florack
(86) International application number: PCT/JP2015/051915
(87) International publication number: WO 2015/118970

(57) **Abstract**

By deciding whether a beacon device is authentic based on a distance between a position, which is represented by current position information obtained by a handheld wireless terminal, and a position, which is represented by position-of-installation information registered in a server, fraudulent use of the beacon device can be prevented. Accordingly, reliability of a communication system including the beacon device is upgraded, and a service such as an electronic coupon can be safely provided.

## Description

### Technical Field

The present invention relates to a communication system, server, and computer program. More particularly, the present invention is concerned with a technology of preventing fraudulent use of information, which is originated from a beacon device, in a wireless communication system including the beacon device.

### Background Art

In recent years, a beacon device that is disposed in a store or amusement facility and transmits a beacon signal to a handheld wireless terminal owned by a consumer, such as, a smartphone has come to be put on the market. In the handheld wireless terminal that has received the beacon signal from the beacon device, an application installed in the handheld wireless terminal fetches information on a commodity from the beacon signal, and displays commodity information on a display unit of the handheld wireless terminal.

As mentioned above, as a technology allowing the beacon device to transmit the beacon signal and allowing the handheld wireless terminal to receive the beacon signal, for example, what is disclosed in Patent Literature 1 is known.

In Patent Literature 1, proposals are made of a data communication system in which a seller-side device uses a beacon signal to sense the fact that a purchaser-side device carried by a purchaser has approached a store, begins communicating with the purchaser-side device, and gives commodity advertisements or the like to the purchaser-side device.

### Citation List

### Patent Literature

PTL 1: Japanese Unexamined Patent Application Publication No. 2000-134147

### Summary of Invention

### Technical Problem

Almost all usages of the beacon device have been classified into, similarly to the one disclosed in Patent Literature 1, digital signage that displays advertisements of commodities or the like on a handheld wireless terminal. By utilizing the feature, for example, a beacon device that provides an electronic coupon with which the privilege of a discount of a commodity is given to a customer of a store is conceivable.

However, if the beacon device is provided with the capability of issuing an electronic coupon, there is a possibility that the electronic coupon may be fraudulently used. For example, assuming that the beacon device installed in a store transmits beacon data with which a visiting customer can amass points, a device that resembles a handheld wireless terminal and is intended to attempt cracking may be approached to the beacon device in order to intercept and record communication data of the electronic coupon. Accordingly, there is a fear that in a place outside the store, a device that resembles the beacon device may be used to fraudulently issue the electronic coupon for the purpose of amassing points.

Some countermeasures are conceivable against cracking intended to fraudulently use information issued from the beacon device. For example, one of the countermeasures is to update beacon data at intervals of a short period. However, if a cracker acquires the beacon data every time of updating, the countermeasure is violated.

The present invention addresses the foregoing problem. An object of the present invention is to provide a communication system that decides whether a beacon device is authentic and upgrades reliability of the beacon device, a server, and a computer program.

### Solution to Problem

In order to address the aforesaid problem, a communication system of the present invention includes a server that has a database in which identification information with which communication device that transmits a beacon signal is identified and position information representing a position of installation of the communication device are specified in association with each other, and a communication terminal capable of communicating with the server.

The communication terminal includes a beacon receiver that receives a beacon signal so as to acquire the identification information on the communication device which is contained in the beacon signal, a positioning unit that measures a current position so as to acquire current position information, and a server communication unit that transmits the identification information on the communication device and the current position information, which is obtained at the time of receiving the beacon signal, to the server.

The server includes a decision unit that references the database, and uses the position information on the communication device identified with the transmitted identification information, and the current position information, which is obtained at the time of receiving the beacon signal, to decide whether the communication device is authentic, and a communication unit that transmits a result of the decision to the communication terminal.

### Advantageous Effects of Invention

The present invention can provide a communication system that decides whether a beacon device is authentic and upgrades reliability of the beacon device, a server, and a computer program.

Problems, components, and advantageous effects other than those mentioned above will be apparent from a description of an embodiment to be made below.

### Brief Description of Drawings

[Fig. 1] Fig. 1 is a schematic diagram showing an overall configuration of a communication system in accordance with an embodiment.
[Fig. 2] Fig. 2 is a functional block diagram of the communication system.
[Fig. 3] Fig. 3 is a diagram showing an example of a beacon signal.
[Fig. 4] Fig. 4 is a diagram showing an example of a beacon position database.
[Fig. 5] Fig. 5 is a processing flowchart describing a flow of communication to be performed among a beacon device, handheld wireless terminal, and server.
[Fig. 6] Fig. 6 is a processing flowchart describing a flow of communication to be performed among the beacon device, a data registration terminal, and the server.

### Description of Embodiments

The present embodiment discloses a communication system including a beacon device that conforms to the BLE standard. Herein, BLE stands for Bluetooth (registered trademark) Low Energy, and the BLE standard is one of short-range wireless communication technologies. The BLE standard stipulates that a star network topology having plural peripherals connected to one central should be constructed. A frequency band stipulated in the BLE standard is a bandwidth around 2.4 GHz. The BLE standard stipulates that the frequency band should be divided into forty channels and a mechanism called adaptive frequency hopping should be adopted to avoid channels on which interference or crosstalk occurs.

The beacon device corresponds to the peripheral, and the handheld wireless terminal corresponds to the central. The beacon device that is the peripheral transmits an advertising packet, which serves as a beacon signal and is stipulated in the BLE standard, at advertising intervals, that is, at intervals of a predetermined transmission time stipulated in the BLE standard. On receipt of the advertising packet, the handheld wireless terminal that is the central can establish a connection to the central through a predetermined procedure (protocol). However, whether or not to establish a connection depends on the behavior of the central. If content such as an advertisement is received, the central merely receives the advertising packet that is broadcasted from the peripheral.

### [Overall configuration of a communication system]

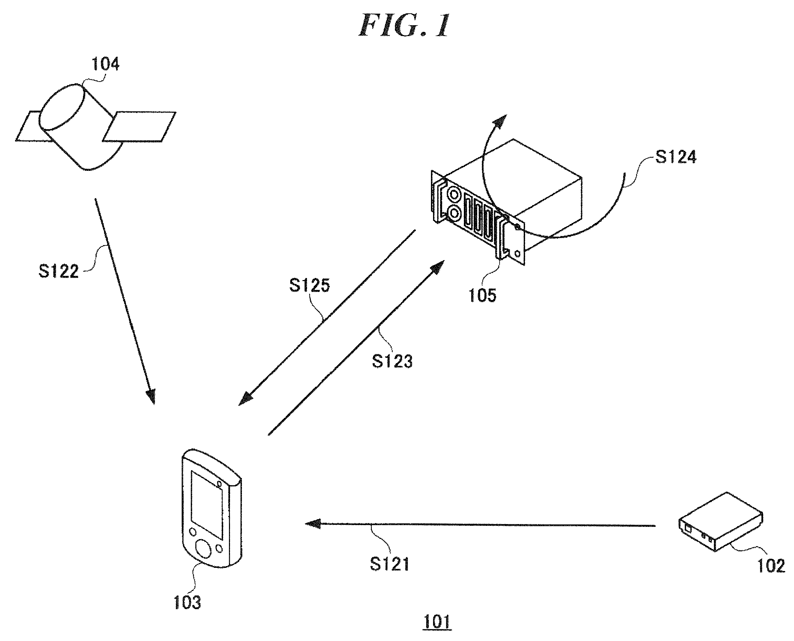

Fig. 1 is a schematic diagram showing an overall configuration of a communication system 101 in accordance with the present embodiment.

A beacon device 102 that is an example of communication device and is installed in a store or the like broadcasts a beacon signal, which contains a beacon ID and beacon data, at intervals of a certain transmission time. The beacon ID is information with which the beacon device 102 is uniquely identified. A person who owns a handheld wireless terminal 103 approaches the beacon device 102. When the distance between the handheld wireless terminal 103 and beacon device 102 becomes a predetermined distance or less, the handheld wireless terminal 103 receives the beacon ID and beacon data broadcasted from the beacon device 102 (S121).

A beacon application program that receives a beacon signal, which is originated from the beacon device 102, and performs predetermined processing is installed in the handheld wireless terminal 103, and is operating. In addition, the handheld wireless terminal 103 is provided with a positioning feature that receives a radio wave from a GPS satellite 104 and calculates current position information on the handheld wireless terminal 103.

On receipt of the beacon signal, the handheld wireless terminal 103 transmits the beacon ID, which is contained in the beacon signal and the current position information acquired by the positioning feature by receiving radio waves from the GPS satellite (S122), to a server 105 (S123).

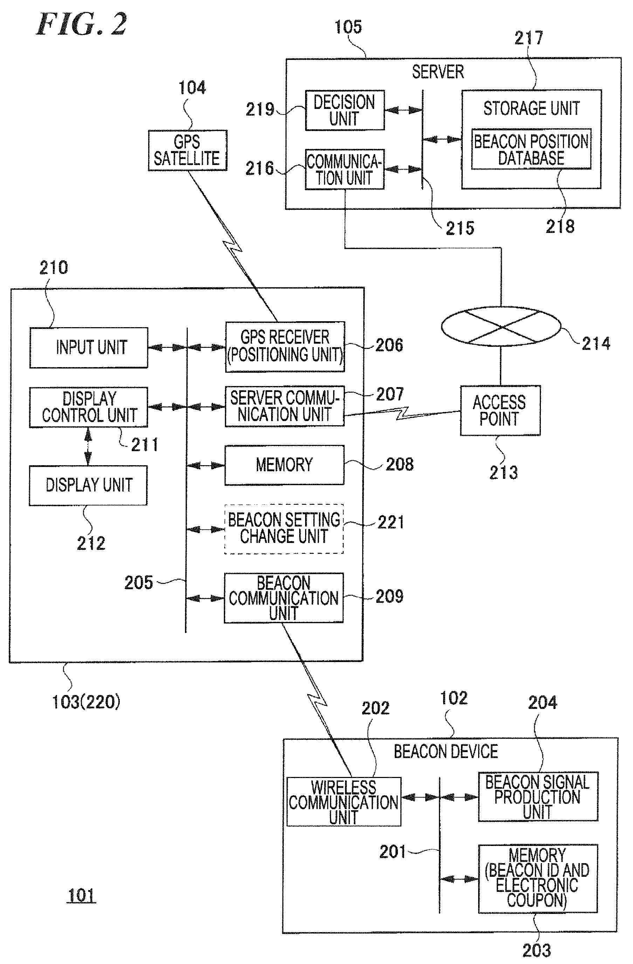

On receipt of the beacon ID and current position information from the handheld wireless terminal 103, the server 105 collates these information with the contents of a beacon position database 218 (see Fig. 2) included in a storage unit (see Fig. 2) of the server 105. In the beacon position database 218, the beacon ID of the beacon device 102 and position-of-installation information on the beacon device 102 are registered in advance. The server 105 calculates the distance between a position represented by the current position information received from the handheld wireless terminal 103 and a position represented by the position-of-installation information registered in the beacon position database 218. The calculated distance is then compared with a predetermined threshold (S124). If the calculated distance falls below the predetermined threshold, the server decides that the beacon signal is originated from the authentic beacon device 102 installed in a store or the like by an authorized owner, and returns a result of the decision to the handheld wireless terminal 103 (S125).

If the beacon device 102 is found to be authentic on the basis of the result of the decision received from the server 105, the handheld wireless terminal 103 normally processes the beacon data contained in the beacon signal. For example, if the beacon data represents an electronic coupon, the handheld wireless terminal 103 performs addition processing on the electronic coupon. If the beacon device 102 is a false one which a cracker has installed for a fraudulent purpose, the beacon data contained in the beacon signal is processed as fraudulent data. For example, if the beacon data represents the electronic coupon, an alarm is displayed on a display unit without performing the addition processing on the electronic coupon.

Fig. 2 is a functional block diagram of the communication system 101.

The beacon device 102 has a wireless communication unit 202, which is formed with a wireless communication circuit, connected over a bus 201 of a known microcomputer. The microcomputer has a known configuration, that is, has a CPU, ROM, and RAM interconnected over the bus 201. A memory 203 is an electrically rewritable nonvolatile memory such as a flash memory. The memory 203 stores a program that implements a feature of a beacon signal production unit 204, and a beacon ID. Further, data to be transmitted together with the beacon ID in the form of an advertising packet is stored by a data registration terminal that will be described later. In the present embodiment, information on the electronic coupon is stored.

The beacon signal production unit 204 encodes the beacon ID and beacon data into a data frame conformable to the BLE standard, and transmits the data frame to the wireless communication unit 202 at regular intervals. The data frame to be produced by the beacon signal production unit 204 varies depending on a communicating state. For broadcasting, the data frame is the advertising packet. For bidirectional communication, the data frame is a unicasting packet.

The wireless communication unit 202 performs predetermined modulation processing on a data frame received from the beacon signal production unit 204, and broadcasts the data frame by placing the data frame on a radio wave of 2.4 GHz. If necessary, the wireless communication unit 202 performs bidirectional unicast communication with a central such as the handheld wireless terminal 103. For example, the wireless communication unit 202 uses a predetermined data registration terminal to register content, which is broadcasted together with the beacon ID, in the memory 203. In this case, the wireless communication unit 202 bi-directionally communicates with the central that is the data registration terminal.

Now, the beacon signal will be described below.

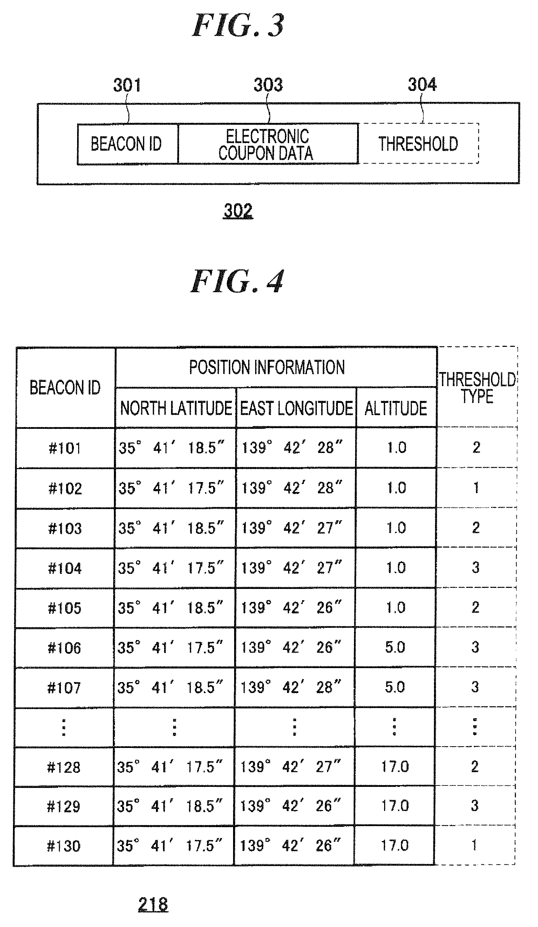

Fig. 3 is a diagram showing an example of the beacon signal. The beacon device 102 broadcasts the beacon signal 302, which contains a beacon ID 301 and predetermined content, at intervals of a certain time. In the present embodiment, the content is electronic coupon data 303. However, in the case of the beacon device 102 in an initial state, since the content is not registered in the memory 203, the beacon ID 301 alone is broadcasted.

Referring back to Fig. 2, the description of the communication system 101 will be continued.

The handheld wireless terminal 103 has a GPS receiver 206, server communication unit 207, memory 208, beacon communication unit 209, input unit 210, and display control unit 211 interconnected over a bus 205 of a known microcomputer. A display unit 212 is further connected to the display control unit 211.

The GPS receiver 206 has the capability of a positioning unit that receives a radio wave transmitted from the GPS satellite 104, performs a positioning operation, and calculates current position information.

The server communication unit 207 includes transmitting and receiving circuits for wireless communication, connects the handheld wireless terminal 103 to an access point 213 according to a telecommunication standard such as Long-Term Evolution (LTE), and connects the handheld wireless terminal 103 onto the Internet 214 via the access point 213. The server communication unit 207 may be a known wireless LAN.

The memory 208 is an electrically rewritable nonvolatile memory such as a flash memory, and stores firmware, an OS, and a beacon application program that allows the handheld wireless terminal 103 to operate. The memory 208 further stores electronic coupon information contained in a beacon signal 302 received from the beacon device 102 via the beacon communication unit 209. In the handheld wireless terminal 103 of the present embodiment, the beacon communication unit 209 merely receives an advertising packet broadcasted from the beacon device 102, but does not transmit any data to the beacon device 102. In the present embodiment, the beacon communication unit 209 can be said to be a beacon receiver.

The input unit 210 is, for example, a transparent electrostatic touch panel. The input unit 210 accepts a user's manipulation and produces manipulation information. The display unit 212 is, for example, a liquid crystal display. The input unit 210 and display unit 212 are unitedly layered, whereby a known touch panel is formed.

The display control unit 211 is part of a feature to be provided by the beacon application program, and produces information with which the display unit 212 is controlled. More particularly, when result-of-decision information which signifies that the beacon device 102 is authentic is received from the server 105, the display unit 212 is controlled to display, for example, information signifying that points are added to an electronic coupon owned by the user of the handheld wireless terminal 103. In addition, the display control unit 211 performs addition processing concerning the electronic coupon and update processing of updating the electronic coupon information stored in the memory 208.

The server 105 is a known computer to be connected on the Internet 214. A communication unit 216 connected over a bus 215 includes a known network interface card (NIC) and a TCP/IP protocol stack, and performs predetermined communication with the handheld wireless terminal 103 over the Internet 214. A protocol employed is the encryption hypertext transport protocol (HTTP) using the SSL/TL defined in, for example, the RFC 2246. In this case, the server 105 acts as a known web server.

A storage unit 217 formed with a nonvolatile storage such as a hard disk drive and connected over the bus 215 stores a beacon position database 218.

### [Structure of the beacon position database 218]

Now, the beacon position database 218 will be described below.

Fig. 4 is a diagram showing an example of the beacon position database 218.

The beacon position database 218 includes a beacon ID field and position information field. The position information field further includes a north latitude field, east longitude field, and altitude field.

The beacon ID field stores the beacon ID 301 of the beacon device 102.

The position information field stores position information representing a position at which the beacon device 102 is installed is stored, it means, the north latitude field stores north latitude data, the east longitude field stores east longitude data, and the altitude field stores altitude data.

A reason that the altitude data is contained is because of a possibility that a false beacon device 102 may be installed in any of different floors of the same building.

Referring back to Fig. 2, the description of the server 105 will be continued below.

A decision unit 219 connected over the bus 215 searches the beacon position database 218 on the basis of the beacon ID 301 which is queried by the handheld wireless terminal 103, and acquires position information (hereinafter, position-of-installation information) from the position information field. The decision unit 219 then calculates a straight distance from a position represented by current position information reported from the handheld wireless terminal 103. The decision unit 219 compares the calculated straight distance with a predetermined threshold that is not shown in the figure but is stored in the storage unit 217. The decision unit 219 decides that the beacon device 102 concerning the beacon ID 301 queried by the handheld wireless terminal 103 is the authentic beacon device 102 installed in a store by an authorized owner, and returns a result of the decision to the handheld wireless terminal 103 via the communication unit 216.

The decision unit 219 calculates the straight distance between the position of the beacon device 102 represented by the current position information and a position represented by the position-of-installation information, compares the straight distance with a predetermined threshold, and decides whether the beacon device 102 is authentic. Preferably, the threshold can be varied depending on an environment in which the beacon device 102 is installed.

For example, when the beacon device 102 is installed in a store and transmits an electronic coupon to a visiting customer, movement of the beacon device 102 within the same store is permitted. Therefore, even if the position represented by the current position information reported from the handheld wireless terminal 103 is separated on the order of several tens of meters from the position represented by the position-of-installation information, as long as the distance does not reach a distance at which the beacon device is estimated to exist outside the store, the decision unit 219 decides that the position represented by the reported current position information results from movement of the beacon device within the store.

In contrast, if the beacon device 102 transmits an electronic coupon concerning a commodity, which is placed in a specific section within a store, to a customer who has approached the specific section or shelf, movement of the beacon device 102 beyond the section even within the same store is not permitted. Therefore, if the position represented by the current position information reported from the handheld wireless terminal 103 is separated on the order of several meters from the position represented by the position-of-installation information, as long as the distance reaches a distance at which the beacon device is estimated to fall outside the site of the section, the decision unit 219 decides that the position represented by the reported current position information results from movement of the beacon device beyond the section.

Two ways of providing the decision unit 219 with the threshold are conceivable. One of the ways is to preserve the threshold in the beacon device 102. Payload of the beacon signal 302 shown in Fig. 3 includes, in addition to the beacon ID 301 and electronic coupon data 303, a threshold 304. The threshold 304 is broadcasted together with the electronic coupon data 303 as an advertising packet by the beacon device 102. The handheld wireless terminal 103 receives the threshold 304 together with the beacon ID 301 and electronic coupon data 303, and in turn transmits the beacon ID 301 and threshold 304 to the server 105. The decision unit 219 of the server 105 uses the threshold 304 received from the handheld wireless terminal 103, and decides whether the beacon device 102 is authentic.

The other way of providing the threshold is to preserve the threshold in the server 105. The beacon position database 218 shown in Fig. 4 includes, in addition to the position information field, a threshold type field. The threshold type field specifies threshold type information representing the type of threshold. The threshold type information is information that defines any of different types of thresholds. For example, type 1 defines 3 meters, type 2 defines 10 meters, and type 3 defines 100 meters.

The decision unit 219 of the server 105 receives the beacon ID 301 and current position information from the handheld wireless terminal 103, and in turn acquires the threshold type information together with the position-of-installation information from a record that is retrieved based on the beacon ID 301 from the beacon position database 218. Using the threshold defined with the threshold type information, the decision unit 219 decides whether the beacon device 102 is authentic.

A criterion for deciding whether the beacon device 102 is authentic is not limited to a distance. The decision may be made in consideration of map information or a sketch of a building in which the beacon device 102 is installed. For example, assume that the handheld wireless terminal 103 that has detected the beacon device 102 which is supposed to be installed in a haberdasher's shop sends current position information at an adjoining restaurant. In this case, even if the position represented by the current position information is close to a position represented by position-of-installation information, the decision unit 219 references the sketch, which is preserved in the storage unit 217 of the server 105, and decides that there is a high possibility that the beacon device 102 may be false.

### [Processing of the communication system 101]

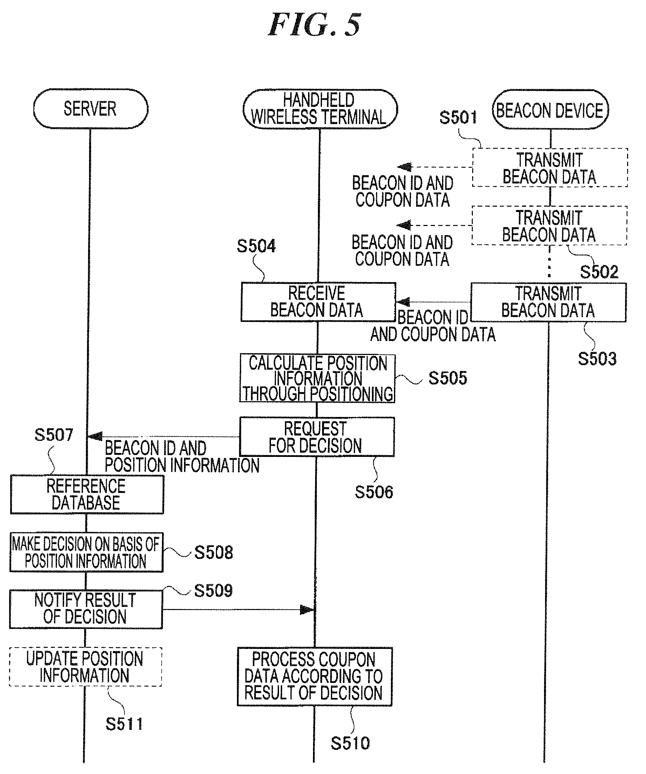

Fig. 5 is a processing flowchart describing a flow of communication to be performed among the beacon device 102, handheld wireless terminal 103, and server 105.

The beacon device 102 broadcasts beacon data at constant time intervals (S501 and S502). The handheld wireless terminal 103 approaches the beacon device 102, and receives the beacon data broadcasted from the beacon device 102 (S503 and S504).

The display control unit 211 of the handheld wireless terminal 103 analyzes the beacon data received via the beacon communication unit 209, recognizes that the beacon data contains an electronic coupon, and then activates the GPS receiver 206. The GPS receiver 206 receives a radio wave from the GPS satellite 104, and calculates current position information through positioning (S505).

The display control unit 211 acquires the current position information from the GPS receiver 206, in turn transmits the current position information together with the beacon ID 301, which is contained in the beacon data, to the server 105 via the server communication unit 207, and requests the server 105 to decide whether the beacon device 102 is authentic (S506).

The decision unit 219 of the server 105 receives a request, which is made to decide whether the beacon device 102 is authentic, from the handheld wireless terminal 103 via the communication unit 216, and in turn searches the beacon position database 218 on the basis of the beacon ID 301 (S507). The decision unit 219 reads position-of-installation information from the position information field of a record, which is a hit of the search, in the beacon position database 218. The decision unit 219 then calculates a straight distance from a position represented by the current position information on the handheld wireless terminal 103, compares the straight distance with the predetermined threshold, and decides whether the beacon device 102 is authentic (S508). The decision unit 219 transmits a result of the decision to the handheld wireless terminal 103 via the communication unit 216 (S509).

On receipt of the result of the decision from the server 105 via the server communication unit 207, the display control unit 211 of the handheld wireless terminal 103 processes an electronic coupon according to the result of the decision (S510). At step S510, if the result of the decision demonstrates that the beacon device 102 is authentic, addition processing is performed on the electronic coupon stored in the memory 208. Thereafter, a message or predetermined illustration signifying that points are normally added to the electronic coupon is displayed on the display unit 212. If the result of the decision demonstrates that the beacon device 102 is false, a warning message or predetermined illustration signifying that the electronic coupon is false is displayed on the display unit 212.

Only when the beacon device 102 is authentic, the server 105 may perform additional processing such as updating of position information after transmitting the result of the decision (S511).

### [Beacon data registration processing]

A description has been made that in the communication system 101 of the present embodiment, the beacon ID 301 and position-of-installation information are registered in the beacon position database 218 of the server 105 in order to decide based on position information on the beacon device 102 whether the beacon device is authentic. Hereinafter, a description will be made of processing to be performed in order to newly register position information on the beacon device 102 in the beacon position database 218 or to modify registered position information.

For newly registering position information on the beacon device 102 in the beacon position database 218 or updating the position information, for example, a method that an administrator of a beacon device individually enters a position of installation in the server 105 is conceivable. As another example, a method using a data registration terminal capable of communicating with the server 105 is conceivable. That is, the data registration terminal is used to obtain position information on a position, at which a beacon signal is received from the beacon device 102, transmit the position information together with the beacon ID to the server 105, and then register the position information in the beacon position database 218.

When registering beacon data such as an electronic coupon in the beacon device 102 or updating registered beacon data, communication device that communicates with the beacon device 102 can grasp through, for example, preliminary authentication, that the beacon device 102 is authentic. When registering content such as the electronic coupon in the beacon device 102, a data registration terminal may acquire current position information on the data registration terminal existing nearby the beacon device 102 together with the beacon ID 301 of the beacon device 102, and register the current position information and beacon ID in the beacon position database 218 of the server 105.

Now, a data registration terminal 220 will be briefed below.

In Fig. 2, the handheld wireless terminal 103 also corresponds to the data registration terminal 220. A difference of the data registration terminal 220 from the handheld wireless terminal 103 is that the data registration terminal includes a beacon setting change unit 221 drawn with a dashed line. In other words, when an application program that provides a feature of registering data such as an electronic coupon in the beacon device 102 is installed and is operating in the handheld wireless terminal 103, the data registration terminal 220 is realized.

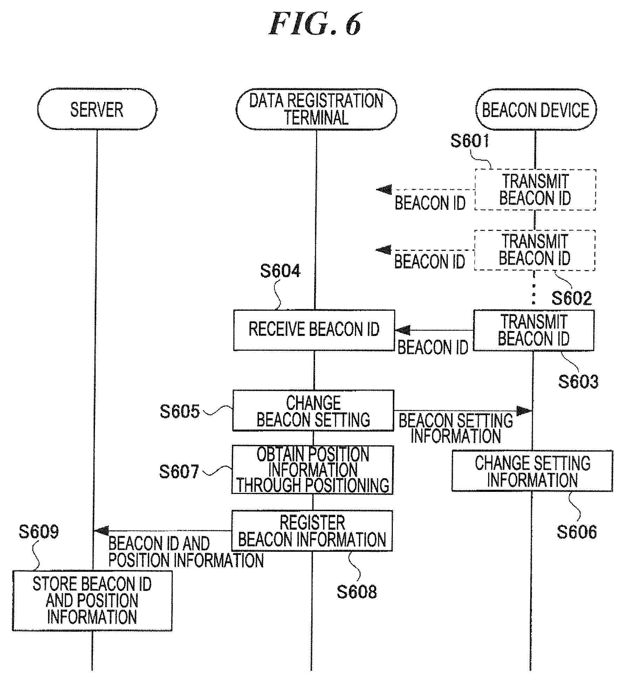

Fig. 6 is a processing flowchart describing a flow of communication to be performed among the beacon device 102, data registration terminal 220, and server 105.

The beacon device 102 broadcasts a beacon ID at constant time intervals (S601 and S602). The data registration terminal 220 receives the beacon ID when approaching the beacon device 102 (S603 and S604).

The beacon setting change unit 221 of the data registration terminal 220 transmits predetermined content (beacon setting information) such as an electronic coupon together with an instruction, with which the content is registered, via the beacon communication unit 209 (S605). On receipt of the content as well as the content registration instruction, the wireless communication unit 202 of the beacon device 102 stores the content in the memory 203 (S606).

The beacon setting change unit 221 of the data registration terminal 220 acquires the beacon ID 301 from the beacon device 102, and thereafter activates the GPS receiver 206. The GPS receiver 206 receives a radio wave transmitted from the GPS satellite 104, and calculates current position information through positioning (S607).

The beacon setting change unit 221 acquires the current position information from the GPS receiver 206, in turn transmits the current position information together with the beacon ID 301, which is contained in the beacon data, to the server 105 via the server communication unit 207, and requests the server 105 to register position information on the beacon device 102 (S608).

The storage unit 217 of the server 105 receives the beacon ID 301 of the beacon device 102 and the request for registration of the position information from the data registration terminal 220 via the communication unit 216, and then registers a new record, which includes the beacon ID 301 and position information, in the beacon position database 218 (S609).

According to the foregoing processing sequence, the beacon ID 301 of the beacon device 102 and the position information on the beacon device 102 can be reliably registered in the beacon position database 218 of the server 105.

Application examples described below can be drawn out of the present embodiment.
(1) In Fig. 2, the server 105 includes the decision unit 219. The decision unit 219 of the server 105 calculates a distance between a position represented by current position information on the handheld wireless terminal 103 and a position represented by position-of-installation information in the beacon position database 218, and decides whether the beacon device 102 is authentic. The decision unit 219 may be included in the handheld wireless terminal 103. In this case, the handheld wireless terminal 103 sends the beacon ID 301 of the beacon device 102 so as to query the server 105 about the position-of-installation information, and receives the position-of-installation information from the server 105. The decision unit 219 calculates a straight distance between the position represented by the current position information and the position represented by the position-of-installation information, compares the straight distance with the threshold, and decides whether the beacon device 102 is authentic.
(2) In Fig. 6, the data registration terminal 220 includes the GPS receiver 206. The data registration terminal 220 acquires current position information on itself, and registers the current position information as position information on the beacon device 102 in the beacon position database 218 of the server 105. The GPS receiver 206 may be included in the beacon device 102. When the beacon device 102 includes the GPS receiver 206 and registers position information in the server 105 via the data registration terminal 220, the data registration terminal 220 may not include the GPS receiver 206, but the beacon setting change unit 221 alone should be in action.
(3) In the foregoing application examples, the beacon device 102 includes the GPS receiver 206, and the data registration terminal 220 registers position information, which is obtained by the GPS receiver 206 of the beacon device 102, in the beacon position database 218 of the server 105. If the beacon device 102 includes a feature of connecting the beacon device onto the Internet 214 such as a wireless LAN, the beacon device can directly communicate with the server 105 without intervention of the data registration terminal 220, and can register the position information, which is obtained by the GPS receiver 206 of the beacon device 102, in the beacon position database 218 of the server 105.
(4) Depending on a place in which the beacon device 102 is installed, a radio wave from the GPS satellite 104 may not reach. For example, the radio wave does not reach a basement floor of a building. If the beacon device 102 is installed in such a place, the data registration terminal 220 may register in the beacon position database 218 position information which is obtained immediately before the data registration terminal reaches the place where the beacon device 102 is installed, that is, immediately previous position information obtained when the radio wave can be received from the GPS satellite 104. In this case, the handheld wireless terminal 103 uses position information, which is obtained immediately before the handheld wireless terminal reaches the place where the beacon device 102 is installed, that is, the immediately previous position information, which is obtained when the radio wave can be received from the GPS satellite 104, to request the server 105 to decide whether the beacon device 102 is authentic.
(5) An example in which a beacon device transmits coupon data of an electronic coupon in the form of a beacon signal has been described so far. The present invention is not limited to the example. For example, needless to say, the beacon device may transmit data other than the electronic coupon, such as, information, which is used to identify commodity information to be displayed on a display screen of a handheld wireless terminal, or predetermined information on a web, in the form of the beacon signal.
(6) In addition, a beacon device may transmit processing information based on which a handheld wireless terminal or server performs predetermined processing. For example, the handheld wireless terminal may transmit the received processing information to the server, and the server may transmit data, which is identified with the processing information, to the handheld wireless terminal. The processing information may not be a statement that specifies predetermined processing but may be information for identification that can be interpreted by the handheld wireless terminal or server and allows the handheld wireless terminal or server to perform the predetermined processing. A beacon signal may not carry special information regarded as the processing information, but a beacon ID may also serve as the processing information (or the information for identification).
(7) A case where a beacon device transmits a beacon ID and beacon data such as an electronic coupon in the form of the same beacon signal has been described so far. The beacon device may, for example, transmit the beacon ID in the form of a first beacon signal, and transmit the beacon data in the form of a second beacon signal.
   The above case is conceived as an example in which plural beacon devices having unique beacon IDs respectively are used to transmit the same beacon data (for example, an electronic coupon of the same store). For example, the same beacon data is stored in the memories of the beacon devices having the respective unique beacon IDs stored in them, and each data is transmitted using two signals. In this example, a second beacon signal does not contain the beacon ID. Therefore, when the aforesaid embodiment is used as it is, the handheld wireless terminal 103 cannot decide whether the second beacon signal is valid.
   The handheld wireless terminal 103 that has received first and second beacon signals from the foregoing beacon device obtains current position information at the time of receiving each signal. By comparing thus obtained pieces of current position information with each other, whether the received first and second beacon signals have been transmitted from the same beacon device 102 is decided. More particularly, if a difference between pieces of position information obtained at the times of receiving two respective signals falls within a predetermined range, the handheld wireless terminal 103 decides that the two received signals have been transmitted from the same beacon device 102. The predetermined range is typically determined depending on an error in measurement caused by the means which is employed in positioning.
   Thereafter, the handheld wireless terminal 103 transmits a beacon ID, which is contained in the first beacon signal, and the current position information which is obtained at the time of receiving the first beacon signal, to the server 105. Through the processing sequence described by referring to Fig. 6, whether the beacon device 102 that is a transmission source of the first beacon signal is authentic is decided. If a decision is made that the beacon device 102 is authentic, the handheld wireless terminal 103 decides that the second beacon signal which is decided to have been transmitted from the beacon device 102 is a valid signal, and processes beacon data contained in the second beacon signal.
   In the foregoing example, the display control unit 211 acts as a first beacon receiver that receives the first beacon signal so as to acquire the beacon ID of the beacon device 102 contained in the first beacon signal, and also acts as a second beacon receiver that receives the second beacon signal so as to acquire processing information concerning predetermined processing which is contained in the second beacon signal. Further, the display control unit 211 acts as a signal decision unit that uses current position information obtained at the time of receiving the first beacon signal, and current position information, which is obtained at the time of receiving the second beacon signal, to decide whether the first and second beacon signals have been transmitted from the same beacon device 102.
(8) A description will be made of components and processing which the handheld wireless terminal 103 uses to severely decide whether the received first and second beacon signals have been transmitted from the same beacon device 102 in the foregoing example. In this case, the handheld wireless terminal 103 further includes a circuit that is not shown in the figure and measures the strengths of the received signals (received signal strength indicator (RSSI)), and a signal strength comparison circuit that is not shown in the figure and compares the strengths of the received signals with each other.

When receiving the first beacon signal, the handheld wireless terminal 103 obtains current position information representing a position at which the first beacon signal is received, and acquires the strength of the received first beacon signal. In addition, when receiving the second beacon signal, the handheld wireless terminal 103 obtains current position information representing a position at which the second beacon signal is received, and acquires the strength of the received second beacon signal. Thereafter, the handheld wireless terminal 103 compares the pieces of information, which represent the positions at which the respective signals are received, with each other, and compares the received signal strengths each other. If a decision is made that the pieces of position information obtained at the times of receiving the two respective signals have been transmitted from the same beacon device 102, and the strengths of the two received signals fall within a predetermined range, the handheld wireless terminal 103 decides that the two received signals have been transmitted from the same beacon device 102.

Depending on the configuration of the beacon device 102, the first and second beacon signals may conceivably be transmitted with different transmission outputs (for example, antenna powers). In this case, the beacon device 102 preferably transmits the first and second beacon signals by containing information representing the transmission output with which the signal is transmitted, in each of the signals. The handheld wireless terminal 103 compares the information representing the transmission output and is contained in a received signal, with a received signal strength. Thus, the handheld wireless terminal can decide whether the first and second beacon signals have been transmitted from the same beacon device 102.

In relation to the present embodiment, the communication system 101 has been disclosed.

By deciding based on a distance between a position, which is represented by current position information obtained by the handheld wireless terminal 103, and a position, which is represented by position-of-installation information registered in the server 105, whether the beacon device 102 is authentic, fraudulent use of the beacon device 102 can be prevented. Accordingly, the reliability of the communication system 101 including the beacon device 102 is upgraded, and a service such as an electronic coupon can be safely rendered.

The embodiment of the present invention has been described so far. The present invention is not limited to the embodiment but encompasses other variants and application examples as long as the variants and application examples do not depart from the gist of the invention set forth in claims.

For example, the embodiment has the components and system configuration concretely described for a better understanding of the present invention. The present invention is not limited to a system including all the described components. Part of an example can be replaced with a counterpart of another example. A component of an example can be added to another example. Any of components of an example can be added to each example. Part of the components of each example can be deleted or replaced with a counterpart of another example.

Part or the whole of each of the aforesaid components, features, or processing units may be realized by hardware while being designed using, for example, integrated circuits. Each of the aforesaid components or features may be realized by software with which a processor interprets and runs a program that implements each of the features. Pieces of information including the program, which implements each of the features, a table, and a file may be preserved in a memory, a volatile or nonvolatile storage such as a hard disk drive or solid-state drive (SSD), or a recording medium such as an IC card or optical disk.

As for control lines and information lines, only those that are thought to be necessary for a description are shown. All control lines and information lines of a product are not shown. In reality, almost all components may be thought to be interconnected.

Reference Signs List

- 101: communication system,
- 102: beacon device,
- 103: handheld wireless terminal,
- 104: GPS satellite,
- 105: server,
- 201: bus,
- 202: wireless communication unit,
- 203: memory,
- 204: beacon signal production unit,
- 205: bus,
- 206: GPS receiver,
- 207: server communication unit,
- 208: memory,
- 209: beacon communication unit,
- 210: input unit,
- 211: display control unit,
- 212: display unit,
- 213: access point,
- 214: Internet,
- 215: bus,
- 216: communication unit,
- 217: storage unit,
- 218: beacon position database,
- 219: decision unit,
- 220: data registration terminal,
- 221: beacon setting change unit,
- 302: beacon signal,
- 303: electronic coupon data,
- 304: threshold.

## Claims

1. A communication system comprising:
a server including a database in which identification information with which communication device that transmits a beacon signal is identified, and position information representing a position of installation of the communication device are stored in association with each other; and
a communication terminal capable of communicating with the server,
the communication terminal including
a beacon receiver that is configured to receive the beacon signal so as to acquire identification information on the communication device which is contained in the beacon signal,
a positioning unit that is configured to measure a current position so as to acquire current position information, and
a server communication unit that is configured to transmit the identification information on the communication device and the current position information, which is obtained at the time of receiving the beacon signal, to the server, and
the server including
a decision unit that is configured to reference the database, and according to the position information on the communication device, which is identified with the transmitted identification information, and the current position information, which is obtained at the time of receiving the beacon signal, to decide whether the communication device is authentic, and
a communication unit that is configured to transmit a result of the decision to the communication terminal.

2. The communication system according to claim 1, wherein
the decision unit is configured to make the decision according to whether a position represented by the position information on the communication device identified with the transmitted identification information exists within a predetermined range from a position represented by the current position information obtained at the time of receiving the beacon signal.

3. The communication system according to claim 1, wherein
the communication terminal further includes a processing unit that is configured to perform, on the basis of processing information on a predetermined processing contained in the beacon signal received from the communication device that is decided to be authentic, the predetermined processing.

4. The communication system according to claim 1, wherein
the server further includes a data recording unit that is configured to store in the database the current position information, which is obtained at the time of receiving the beacon signal, as the position information on the communication device which is decided to be authentic or not.

5. The communication system according to claim 1, wherein,
the server communication unit of the communication terminal is configured to transmit the identification information on the communication device and the current position information, which is obtained at the time of communicating with the communication device, to the server at the time of communicating with the communication device, and
the server further includes a data recording unit that is configured to store in the database the current position information, which is acquired during communication between the communication terminal and communication device, as the position information on the communication device identified with the identification information.

6. A communication system comprising:
a server including a database in which identification information with which communication device that transmits a beacon signal is identified, and position information representing a position of installation of the communication device are stored in association with each other; and
a communication terminal capable of communicating with the server,
the communication terminal including
a first beacon receiver that is configured to receive a first beacon signal so as to acquire identification information on the communication device which is contained in the first beacon signal,
a second beacon receiver that is configured to receive a second beacon signal so as to acquire processing information on a predetermined processing which is contained in the second beacon signal,
a positioning unit that is configured to measure a current position so as to acquire current position information,
a server communication unit that is configured to transmit the identification information on the communication device and the current position information, which is obtained at the time of receiving the first beacon signal, to the server,
a signal decision unit that is configured according to current position information, which is obtained at the time of receiving the first beacon signal, and current position information, which is obtained at the time of receiving the second beacon signal, to decide whether the first and second beacon signals have been transmitted from the same communication device, and
a processing unit that is configured to perform the predetermined processing on the basis of the processing information contained in the second beacon signal that is decided to have been transmitted from the communication device that is decided to be authentic, and
the server including
a decision unit that is configured to reference the database, and according to the position information on the communication device identified with the transmitted identification information, and the current position information, which is obtained at the time of receiving the beacon signal, to decide whether the communication device is authentic, and
a communication unit that is configured to transmit a result of the decision to the communication terminal.

7. The communication system according to claim 6, wherein:
the communication terminal further includes a signal strength acquisition unit that is configured to acquire the strength of a received signal; and
based on whether a difference between the strength of the received first beacon signal and the strength of the received second beacon signal falls within a predetermined range, the signal decision unit is configured to decide whether the first and second beacon signals have been transmitted from the same communication device.

8. The communication system according to claim 7, wherein:
the first beacon receiver is configured to acquire output information representing a transmission output of the first beacon signal and is contained in the first beacon signal;
the second beacon receiver is configured to acquire output information representing a transmission output of the second beacon signal and is contained in the second beacon signal; and
the signal decision unit is configured to compare the received signal strength of the first beacon signal and the output information on the first beacon signal with the received strength of the second beacon signal and the output information on the second beacon signal, and decide whether the first and second beacon signals have been transmitted from the same communication device.

9. A communication system comprising:
a server including a database in which identification information with which communication device that transmits a beacon signal is identified, and position information representing a position of installation of the communication device are stored in association with each other; and
a communication terminal capable of communicating with the server,
the communication terminal including
a server communication unit that is configured to communicate with the server and can access the database,
a positioning unit that is configured to measure a current position so as to acquire current position information,
a beacon receiver that is configured to receive the beacon signal so as to acquire identification information on the communication device which is contained in the beacon signal, and
a decision unit that is configured to reference the database, and decide whether a position represented by the position information on the communication device identified with the identification information exists within a predetermined range from the position represented by the current position information acquired at the time of receiving the beacon signal.

10. A server including a database in which identification information with which communication device that transmits a beacon signal is identified, and first position information representing a position of installation of the communication device are stored in association with each other, comprising:
a receiver that is configured to receive identification information on the communication device, and second position information representing a position at which the beacon signal is received, which are transmitted from a communication terminal which has received the beacon signal;
a decision unit that is configured to reference the database, and according to the first position information on the communication device, which is identified with the transmitted identification information, and the second position information to decide whether the communication device is authentic; and
a communication unit that is configured to transmit a result of the decision to the communication terminal.

11. A computer program product tangibly embodied in a non-transitory computer readable medium including a program of instructions executable by a server including a database in which identification information with which a communication device that transmits a beacon signal is identified, and first position information representing a position of installation of the communication device are stored in association with each other, the computer program allowing the server to achieve:
a function that receives identification information on the communication device, and second position information representing a position at which the beacon signal is received, which are transmitted from a communication terminal which has received the beacon signal;
a function that references the database, and uses the first position information on the communication device identified with the transmitted identification information, and the second position information to decide whether the communication device is authentic; and
a function that transmits a result of the decision to the communication terminal.
